# EUROPEAN PATENT SPECIFICATION

(11) **EP 2 166 038 B1**
(45) Date of publication and mention of the grant of the patent: **25.01.2012**
(21) Application number: 08777821.3
(22) Date of filing: 03.07.2008
(51) Int. Cl.: C08L 69/00, C08K 3/04, C08L 27/18, C08L 51/08

(54) **FLAME-RETARDANT POLYCARBONATE RESIN COMPOSITION AND MOLDED ARTICLE THEREOF**
FEUERFESTE POLYCARBONATHARZZUSAMMENSETZUNG UND FORMARTIKEL DARAUS
COMPOSITION DE RÉSINE DE POLYCARBONATE RETARDATRICE DE FLAMME ET ARTICLE MOULÉ À PARTIR DE CETTE COMPOSITION

(30) Priority: 11.07.2007 JP 2007181907
(43) Date of publication of application: 24.03.2010
(73) Proprietor: Idemitsu Kosan Co., Ltd., Chiyoda-ku Tokyo 100-8321 (JP)
(72) Inventor: HAYATA, Yusuke, Ichihara-shi Chiba 299-0193 (JP); NODERA, Akio, Ichihara-shi Chiba 299-0193 (JP)
(74) Representative: Gille Hrabal Struck Neidlein Prop Roos
(86) International application number: PCT/JP2008/062069
(87) International publication number: WO 2009/008326

(56) References cited:
- EP-A1- 1 757 630
- JP-A- 2003 221 508
- JP-A- 2004 182 842
- JP-A- 2005 036 200
- JP-A- 2005 154 662
- JP-A- 2006 227 177
- JP-A- 2006 306 960
- US-A1- 2005 038 149
- US-A1- 2006 089 434

## Description

### TECHNICAL FIELD

The present invention relates to flame-retardant polycarbonate resin compositions and molded articles thereof. More specifically, the present invention relates to flame-retardant polycarbonate resin compositions which are excellent in the flame retardancy as well as in the balance between electroconductivity, impact resistance and appearance of molded article and are suitable for the production of thin molded articles for use as automotive parts, electrical or electronic parts, parts of communication equipments and optical parts, films and sheets, and further relates to the molded articles thereof.

### BACKGROUND ART

Polycarbonate resins have been widely used as the material for OA devices, electrical or electronic parts, optical parts, domestic articles, building components, and automotive parts. Particularly, in the application to OA devices, electrical or electronic parts, etc., a higher flame retardancy has been demanded and the flame retardancy has been improved by the addition of various types of flame retardants.

For example, an organohalogen compound or an organophosphorus compound has been hitherto added. However, many of these flame retardants are toxic, in particular, the organohalogen compound releases a corrosive gas when burned. Therefore, it has been recently demanded to improve the flam retardancy by a halogen-free, phosphorus-free flame retardant.

As a technique of enhancing the flame retardancy of polycarbonate resins by a halogen-free, phosphorus-free flame retardant, the addition of a silicone compound or a metal salt has been known (Patent Document 1). However, these flame retardants added may easily cause secondary aggregation to likely reduce the flame retardancy and impact resistance. A material excellent in thermal conductivity is studied in the field of the polycarbonate resin composition containing carbon fibers. However, the technique of flame retardation of a thin film made from such a halogen-free, phosphorus-free composition has not yet been established (Patent Document 2).

It has been reported that a carbon fiber-polycarbonate resin composite added with an organic metal salt is capable of obtaining a flame retardancy of V-0 class at 0.8 mm thickness (Patent Document 3). In addition, a flame-retardant composite of polycarbonate resin and carbon nanotubes has been also studied (Patent Document 4). However, these patent documents describe nothing about the flame retardation at a small thickness (particularly a thickness of 0.5 mm or less) which is required in the field of flame-retardant films and flame-retardant sheets. In addition, the technique described in the patent documents cannot achieve the flame retardation of thin-walled products. Thus, it has been desired to remarkably develop the technique of flame retardation.

[Patent Document 1]: JP 2005-263909A
[Patent Document 2]: JP 2007-31611A
[Patent Document 3]: JP 2007-100023A
[Patent Document 4]: JP 3892307B

### DISCLOSURE OF THE INVENTION

### Problems to Be Solved by the Invention

An object of the present invention is to provide a flame-retardant polycarbonate resin composition which shows a high flame retardancy even at a thickness as thin as 0.5 mm or less, which is applicable to the production of thin molded article for various uses, and which is well balanced in electroconductivity, impact resistance, and appearance of molded article. Another object of the present invention is to provide molded articles thereof.

### Means for Solving the Problems

As a result of extensive research, the inventors have found that the above objects are achieved by blending an aromatic polycarbonate resin with a carbon nanotubes and a polyorganosiloxane-containing graft copolymer as a flame retardant component. The present invention is based on this finding.

Namely, the present invention provides:
1. a flame-retardant polycarbonate resin composition which contains 100 parts by mass of an aromatic polycarbonate resin (A), 0.1 to 5 parts by mass of carbon nanotubes (B) and 0.1 to 10 parts by mass of a polyorganosiloxane-containing graft copolymer (C), wherein; the content of non-crystalline carbon particles in the carbon nanotubes (B) is 10% by mass or less ;
2. the flame-retardant polycarbonate resin composition 1 mentioned above which further contains 0.05 to 2 parts by mass of a fibril-forming polytetrafluoroethylene (D);
4. a molded article of the flame-retardant polycarbonate resin composition 1 or 2;
5. the molded article 4 for use as automotive parts, electrical or electronic parts or parts of communication equipments; and
6. the molded article 4 in the form of film or sheet.

### EFFECT OF THE INVENTION

According to the present invention, a flame-retardant polycarbonate resin composition which is excellent in the flame retardancy even at a thickness as small as 0.5 mm or less and also excellent in the electroconductivity, impact resistance and appearance of molded article, and molded articles thereof are obtained.

### BEST MODE FOR CARRYING OUT THE INVENTION

The present invention will be described below in more detail.

### (A) Aromatic polycarbonate resin

The flame-retardant polycarbonate resin composition of the present invention contains an aromatic polycarbonate resin (A) (component A). The component A is not specifically limited and includes various types of aromatic polycarbonate resins. Generally, an aromatic polycarbonate produced by the reaction of a dihydric phenol and a carbonate precursor in a solution or melt method, for example, an aromatic polycarbonate produced by the reaction of a dihydric phenol and phosgene or an aromatic polycarbonate produced by the ester exchange reaction between a dihydric phenol and diphenyl carbonate may be used.

Various types of dihydric phenol may be used and examples thereof include 2,2-bis(4-hydroxyphenyl)propane (bisphenol A), bis(4-hydroxyphenyl)methane, 1,1-bis(4-hydroxyphenyl)ethane, 2,2-bis(4-hydroxy-3,5-dimethylphenyl)propane, 4,4'-dihydroxydiphenyl, bis(4-hydroxyphenyl)cycloalkane, bis(4-hydroxyphenyl) oxide, bis(4-hydroxyphenyl) sulfide, bis(4-hydroxyphenyl) sulfone, bis(4-hydroxyphenyl) sulfoxide, bis(4-hydroxyphenyl) ether, and bis(4-hydroxyphenyl) ketone, with a dihydric phenol mainly composed of a bis(hydroxyphenyl)alkane, particularly bisphenol A being preferred.

Examples of the carbonate precursor includes carbonyl halide, carbonyl ester and haloformate, for example, phosgene, dihaloformate of dihydric phenol, diphenyl carbonate, dimethyl carbonate, and diethyl carbonate. Other dihydric phenols may include hydroquinone, resorcinol and catechol. These dihydric phenols may be used alone or in combination of two or more.

The component A may have a branched structure. Examples of the branching agent include 1,1,1-tris(4-hydroxyphenyl)ethane, α,α',α"-tris(4-hydroxyphenyl)-1,3,5-triisopropylbenzene, phloroglucinol, trimellitic acid, and isatinbis(o-cresol). To modify the molecular weight, phenol, p-t-butylphenol, p-t-octylphenol, and p-cumylphenol may be used.

The component A may be a copolymer having a polycarbonate portion and a polyorganosiloxane portion or a polycarbonate resin containing such a copolymer. Also, the component A may be a polyester-polycarbonate resin which is obtained by the polymerization for producing polycarbonate in the presence of an ester precursor such as a bifunctional carboxylic acid, for example, terephthalic acid and its ester-forming derivative. Further, the component A may be a mixture of different types of polycarbonate resins.

The viscosity average molecular weight of the aromatic polycarbonate resin (A) is preferably 10,000 to 100,000 and particularly preferably 14,000 to 40,000 in view of the mechanical strength and moldability.

### (B) Carbon nanotubes

The flame-retardant polycarbonate resin composition of the present invention contains carbon nanotubes (B) (component B).

The component B is added to enhance the flame retardancy, electroconductivity, and impact resistance of the polycarbonate resin composition. To surely achieve the effect of the carbon nanotubes, it is necessary to sufficiently disperse the carbon nanotubes in the polycarbonate resin composition. The component B is a hollow cylindrical fibrous material made of carbon having an average fiber diameter of 5 to 80 nm, preferably 5 to 20 nm and an average fiber length of 1 to 50 µm, preferably 1 to 10 µm. If the average fiber diameter is less than 5 nm, the carbon nanotubes are hardly dispersed to reduce the electroconductivity. If exceeding 80 nm, the appearance of molded articles is poor and the electroconductivity is reduced. If the length of the carbon nanotubes is less than 1 µm, the electroconductivity is reduced. If exceeding 50 µm, the carbon nanotubes are hardly dispersed to make the appearance of molded articles poor.

To increase the amount of combustion residues and prevent the drip, the amount of non-crystalline carbon particles contained in the carbon nanotubes as impurities is 10% by mass or less. If being 10% by mass or less, the amount of combustion residues increases and the drip is effectively prevented.

Various types of carbon nanotubes and carbon micro coils known in the art may be used as the component B.

The carbon nanotubes are produced by catalytic chemical vapor deposition (CCVD) using iron or cobalt-containing catalyst which is supported in fine pores of zeolite, chemical vapor deposition (CVD), laser ablation, and arc discharge using carbon rods or carbon fibers.

The ends of a carbon nanotube are not needed to be cylindrical and may be deformed into, for example, conical or other shapes. The ends of a carbon nanotube may be either closed or open, preferably open. The closed end of a carbon nanotube can be opened by a chemical treatment with nitric acid, etc. The carbon nanotubes may be single-walled or multi-walled.

The carbon micro coil is a micro-meter size, non-crystalline carbon fiber with a specific double helix coiling morphology, showing an excellent mechanical strength and elasticity.

The blending amount of the carbon nanotubes (B) is generally 0.1 to 5 parts by mass, preferably 0.5 to 3 parts by mass, and more preferably 0.7 to 1.5 parts by mass per 100 parts by mass of the aromatic polycarbonate resin (A). If less than 0.1 parts by mass, the flame retardancy and electroconductivity are insufficient. If exceeding 5 parts by mass, the drip occurs during the burning and the flame retardancy as well as the impact resistance are reduced.

### (C) Polyorganosiloxane-containing graft copolymer

The flame-retardant polycarbonate resin composition of the present invention contains a polyorganosiloxane-containing graft copolymer (C) (component C).

The component C is added as a flame retardant to make the polycarbonate resin composition flame-retardant. Preferred example of the component C includes a polyorganosiloxane-containing graft copolymer which is obtained by polymerizing 0.5 to 10 parts by mass of a vinyl monomer (F) composed of 100 to 50% by mass of a polyfunctional monomer (f-1) and 0 to 50% by mass of a different type of copolymerizable monomer (f-2) in the presence of 40 to 90 parts by mass of polyorganosiloxane particles (E), and further polymerizing a vinyl monomer (G) in an amount of 5 to 50 parts by mass per 100 parts by mass of the total of E, F and G, although not particularly limited thereto.

More preferred component C is obtained by polymerizing 1 to 5 parts by mass of the vinyl monomer (F) in the presence of 60 to 80 parts by mass of the polyorganosiloxane particles (E) and further polymerizing 15 to 39 parts by mass of the vinyl monomer (G) such that the total amount is 100 parts by mass.

The polyfunctional monomer (f-1) is a compound having two or more polymerizable unsaturated bonds in its molecule. Examples thereof include allyl methacrylate, triallyl cyanurate, triallyl isocyanurate, diallyl phthalate, ethylene glycol dimethacrylate, 1,3-butylene glycol dimethacrylate, and divinyl benzene. These compounds may be used alone or in combination of two or more. Of the above compounds, allyl methacrylate is preferred in view of economy and effect.

Examples of the copolymerizable monomer (f-2) include aromatic vinyl monomers such as styrene, α-methylstyrene, p-methylstyrene, and p-butylstyrene; vinyl cyanide monomers such as acrylonitrile and methacrylonitrile; (meth)acrylic ester monomers such as methyl acrylate, ethyl acrylate, propyl acrylate, butyl acrylate, 2-ethylhexyl acrylate, glycidyl acrylate, hydroxyethyl acrylate, hydroxybutyl acrylate, methyl methacrylate, ethyl methacrylate, butyl methacrylate, lauryl methacrylate, glycidyl methacrylate, and hydroxyethyl methacrylate; and carboxyl group-containing vinyl monomers such as itaconic acid, (meth)acrylic acid, fumaric acid, and maleic acid. These monomers may be used alone or in combination of two or more.

The vinyl monomer (G) is used to obtain a polyorganosiloxane-containing graft copolymer. In the improvement of the flame retardancy and impact resistance by blending the graft copolymer to the aromatic polycarbonate resin, the vinyl monomer (G) enhances the compatibility between the graft copolymer and the aromatic polycarbonate resin to allow a uniformly dispersion of the graft copolymer throughout the aromatic polycarbonate resin. Therefore, the vinyl monomer (G) is preferably selected such that the polymer of the vinyl monomer has a solubility parameter of preferably 9.15 to 10.15 (cal/cm³)^{1/2}, more preferably 9.17 to 10.10 (cal/cm³)^{1/2}, and particularly preferably 9.20 to 10.05 (cal/cm³)^{1/2}. If the solubility parameter is within the above ranges, the flame retardancy is enhanced. The details of the solubility parameter are described in JP 2003-238639A.

The average particle size of the component C is 0.1 to 1.0 µm when measured under electron micrograph. If the average particle size is 0.1 to 1.0 µm, the flame retardancy, rigidity and impact strength are sufficient. The component C may be used alone or in combination of two or more.

The blending amount of the polyorganosiloxane-containing graft copolymer (C) is 0.1 to 10 parts by mass, preferably 1 to 5 parts by mass and more preferably 1 to 4 parts by mass per 100 parts by mass of the aromatic polycarbonate resin (A). If less than 0.1 parts by mass, the flame retardancy and impact resistance are insufficient. If exceeding 10 parts by mass, the dispersibility of the component C is reduced to lower the flame retardancy.

### (D) Fibril-forming polytetrafluoroethylene

The flame-retardant polycarbonate resin composition of the present invention may be added with a fibril-forming polytetrafluoroethylene (PTFE) (D) (component D) to enhance the flame retardancy. The component D prevents the dripping of molten resin composition to impart excellent flame retardancy to the resin composition of the present invention.

The component D is not particularly limited as long as being fibril-forming. The "fibril-forming" referred to herein is a tendency of a resin to become fibrous by the bonding between resins under an external action such as shear force. Examples of the component D include polytetrafluoroethylene and a tetrafluoroethylene copolymer such as a tetrafluoroethylene-hexafluoropropylene copolymer, with polytetrafluoroethylene being preferred.

The fibril-forming PTFE has an extremely high molecular weight. The number average molecular weight thereof determined from the standard specific gravity is generally 500,000 or more, preferably 500,000 to 15,000,000, and more preferably 1,000,000 to 10,000,000. The fibril-forming PTFE is produced, for example, by polymerizing tetrafluoroethylene in an aqueous solvent under about 7 to 700 kPa at about 0 to 200 °C preferably 20 to 100 °C in the presence of sodium-, potassium- or ammonium peroxydisulfide.

A solid shape or an aqueous dispersion type of the fibril-forming PTFE may be used, and those classified to type-3 of ASTM Standard are usable. The fibril-forming PTFE classified to type-3 is commercially available under the tradenames, for example, Teflon 6-J (manufactured by Du Pont-Mitsui Fluorochemicals Company, Ltd.), Polyflon D-1 and Polyflon F-103 (manufactured by Daikin Industries, Ltd.). The fibril-forming PTFE other than type-3 includes Argoflon F5 (tradename, manufactured by Montefluos Co., Ltd.) and Polyflon MPAFA-100 (tradename, manufactured by Daikin Industries, Ltd.). The above fibril-forming PTFE may be used alone or in combination of two or more.

The blending amount of the fibril-forming PTFE (D) is generally 0.05 to 2 parts by mass, preferably 0.05 to 1 parts by mass, and more preferably 0.05 to 0.5 parts by mass per 100 parts by mass of the aromatic polycarbonate resin (A). If less than 0.05 parts by mass, a sufficient prevention of melt dripping is difficult to obtain. If exceeding 2 parts by mass, the impact resistance and moldability (appearance of molded article) of the resin composition are deteriorated and the extruded strand of the kneaded resin composition serpentines to make a stable pelletization difficult.

### Flame-retardant polycarbonate resin composition

In addition to the components A to D, the flame-retardant polycarbonate resin composition may further contain, if necessary, a different type of synthetic resin, an elastomer and an additive such as antioxidant, ultraviolet absorber, light stabilizer, different type of flame retardant, lubricant and various types of inorganic filler, as long as the effect of the present invention is not adversely affected.

The flame-retardant polycarbonate resin composition is obtained by a known method in which the aromatic polycarbonate resin (A), the carbon nanotubes (B), the polyorganosiloxane-containing graft copolymer (C), and the optional component such as the fibril-forming polytetrafluoroethylene (D) and additives are blended and melt-kneaded, for example, in a ribbon blender, Henschel mixer, Banbury mixer, a drum tumbler, a single screw extruder, a twin-screw extruder, Ko-kneader, and a multi-screw extruder. It is recommended to melt-knead at 250 to 300 °C.

### Molded article of flame-retardant polycarbonate resin composition

The flame-retardant polycarbonate resin composition is made into thin molded articles with a high flame retardancy by a known molding or forming method such as a blow molding, an injection molding, an extrusion molding, a vacuum forming, a pressure forming, a thermal bending, a compression molding, a calender forming, and a rotational molding.

The flame-retardant polycarbonate resin composition of the present invention is particularly suitable for the production of molded articles to be used in the portion where a high flame retardancy is required during use even at a small thickness (0.5 mm or less), for example, automotive parts, electrical or electronic parts, parts of communication equipments, and thin film and sheet with a thickness of 0.5 mm or less.

### EXAMPLES

The present invention will be described in more detail with reference to the following examples. However, it should be noted that the scope of the present invention is not limited thereto.

The resin compositions were measured for their properties and evaluated in the following methods.

### (1) Flame retardancy

A test piece with a thickness of 1/64 in (0.4 mm) prepared according to UL 94 Standard was subjected to the vertical flame test. Based on the results of tests, the test piece was classified into one of classes specified in UL 94: V-0, V-1, and V-2. The result poorer than V-2 was assigned to V-2 out.

The vertical flame test is a method of evaluating the flame retardancy based on the time of sustaining flame combustion after exposing a test piece with a predetermined dimension, which is placed vertically, to a flame of burner for 10 s.

### (2) Notched IZOD impact strength (IZOD)

An injection-molded test piece with a thickness of 3.2 mm (1/8 in) was measured twice for its impact strength at 23 °C and -30 °C according to ASTM D-256.

### (3) Flexural modulus

According to ASTM D-790, an injection-molded test piece with a thickness of 4 mm and a length of 130 mm was subjected to a three-point bending test at a distance between the supports of 90 mm and a loading speed of 20 mm/min. The flexural modulus was calculated from the gradient of the obtained load-deflection curve.

### (4) Volume specific resistivity

Measured according to JIS K6911 (test plate: 80 × 80 × 3 mm).

### (5) Appearance of molded article

A molded square plate of 100 × 100 × 2 mm was visually observed. When aggregates were found on the surface of the molded article, the appearance was evaluated as "fish-eye." When bubbles were found on the surface of the molded article, the appearance was evaluated as "silver." The appearance was evaluated as "good" when free from both aggregates and bubbles.

### PRODUCTION EXAMPLE (polyorganosiloxane-containing graft copolymer) Production of polyorganosiloxane particles

An aqueous solution of 1 part by mass of sodium dodecylbenzenesulfonate (SDBS), 95 parts by mass of octamethylcyclotetrasiloxane and 5 parts by mass of mercaptopropyldimethoxymethylsilane in 251 parts by mass of pure water was stirred by a mixer at 10000 rpm for 5 min to prepare an emulsion. The emulsion was poured in one lot into a five-necked flask equipped with a stirring device, a reflux condenser, a nitrogen inlet, a monomer feeding inlet and a thermometer. After adding one part by mass (solid basis) of a 10% by mass aqueous solution of dodecylbenzenesulfonic acid under stirring, the temperature was raised to 80 °C over about 40 min and then the reaction was allowed to proceed for 6 h. After cooling to 25 °C and allowing to stand for 20 h, the reaction system was adjusted to pH 6.5 by sodium hydroxide to terminate the polymerization, thereby obtaining a latex containing polyorganosiloxane particles.

The polymerization conversion was 88% and the average particle size of polyorganosiloxane particle in the latex was 0.14 µm. The content of toluene-insoluble was 0% when measured by immersing 0.5 g of solid polyorganosiloxane particles obtained by drying the latex in 80 ml of toluene at room temperature for 24 h, centrifuging the obtained mixture at 12000 rpm for 60 min to separate the toluene insoluble, and then determining the weight percentage of the toluene insoluble is the polyorganosiloxane particles.

### Production of polyorganosiloxane-containing graft copolymer

Into a five-necked flask equipped with a stirring device, a reflux condenser, a nitrogen inlet, a monomer feeding inlet and a thermometer, 300 parts by mass of pure water, 0.2 part by mass of sodium formaldehydesulfoxylate (SFS), 0.01 part by mass of disodium ethylenediaminetetraacetate (EDTA), 0.0025 part by mass of ferrous sulfate, and 70 parts by mass of the polyorganosiloxane particles produced above were charged. The temperature of the system was raised to 60°C under stirring in nitrogen flow. After reaching 60 °C, a mixture of 3 parts by mass of allyl methacrylate (vinyl monomer) and 0.01 part by mass of cumene hydroperoxide (radical polymerization initiator) was added in one lot and the stirring was continued at 60 °C for one hour.

Thereafter, methyl methacrylate (vinyl monomer) and 0.06 part by mass of cumene hydroperoxide (radical polymerization initiator) was further added dropwise over 3 h. The stirring was continued for one hour after the addition to obtain a latex of graft copolymer. Successively, the latex was diluted with water to a solid concentration of 15% by mass and then added with 2 parts by mass (solid basis) of a 10% by mass aqueous solution of calcium chloride, to obtain a solidified slurry. The solidified slurry was heated to 80 °C, cooled to 50 °C, dehydrated and then dried to obtain a powdery polyorganosiloxane graft copolymer.

The polymerization conversion of the obtained graft copolymer was 99%, the average particle size was 0.5 µm, and the content of acetone insoluble was 88% by mass.

### EXAMPLES 1 to 15

Each of the components A to D for the flame-retardant polycarbonate resin composition shown in Table 1 was dried. Then, 100 parts by mass of the aromatic polycarbonate resin (A) was uniformly blended with the carbon nanotubes (B), the polyorganosiloxane-containing graft copolymer (C) and the fibril-forming polytetrafluoroethylene (D) in a tumbler in blending ratios shown in Table 1. The obtained mixture was kneaded at 300 °C and pelletized using a vented twin-screw extruder with a diameter of 35 mm (type: TEM35, manufactured by Toshiba Machine Co., Ltd.).

The obtained pellets were dried at 100 °C for 10 h and then injection-molded using an injection molding machine at a cylinder temperature of 280 °C and a mold temperature of 80 °C, to obtain a test piece for each measurement of the properties (1) to (4) described above. The results of the measurements and evaluations are shown in Table 1.

### COMPARATIVE EXAMPLES 1 to 24

A resin composition obtained by blending the components A to D in blending ratios shown in Tables 2 and 3 was molded in the same manner as in Examples to prepare a test piece. The results of the measurements and evaluations are shown in Tables 2 and 3.

The components A to D shown in Tables 1 to 3 are as follows.

### Component A

A-1: Bisphenol A polycarbonate having a viscosity average molecular weight of 17,500 (trademane: A1700, manufactured by Idemitsu Kosan Co., Ltd.).

A-2: Branched aromatic polycarbonate (trademane: FB2500, manufactured by Idemitsu Kosan Co., Ltd.).

### Component B

B-1: Multi-walled carbon nanotubes: average fiber diameter of 10 to 30 nm, average fiber length of 1 to 10 µm (when observed under a transmission electron micrograph (Hitachi H-600, 75 kV)), open at both ends, non-crystalline carbon particle content of less than 5% by mass (manufactured by Sun Nanotech Co., Ltd.).

B-2: Multi-walled carbon nanotubes: average fiber diameter of 7 to 13 nm, average fiber length of 5 to 15 µm, open at both ends, non-crystalline carbon particle content of less than 2% by mass (trademane: Aligned-MWNTs-10, manufactured by NTP).

B-3: Carbon fibers: average fiber diameter of 6 µm, average fiber length of 1.3 mm (trademane: HTA-C6-SRS, manufactured by Toho Tenax Co., Ltd.).

### Component C

C-1: Polyorganosiloxane-containing graft copolymer-type flame retardant (trademane: MR-01, manufactured by Kaneka Corporation).

C-2: Polyorganosiloxane-containing graft copolymer produced in the production example.

C-3: Salt of perfluorobutylsulfonic acid (trademane: Megaface F-114, manufactured by DIC Corporation).

C-4: Bisphenol A bisdiphenylphophate (trademane: PX-200, Daihachi Chemical Industry Co., Ltd.)

### Component D

D (PTFE): Fibril-forming PTFE (trademane: CD-076, manufactured by Asahi Glass Company Ltd.).

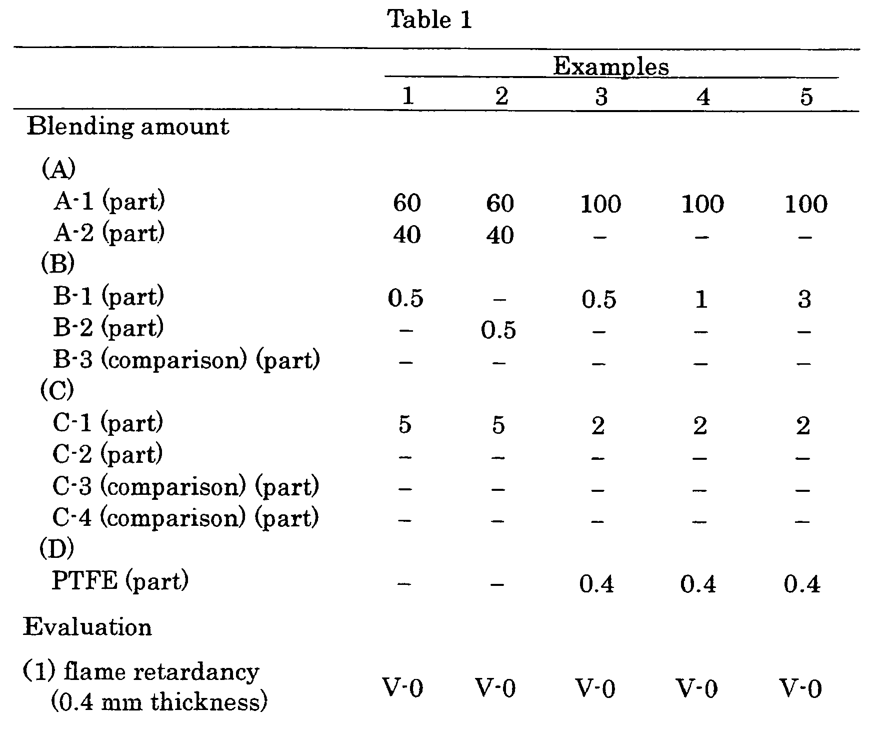

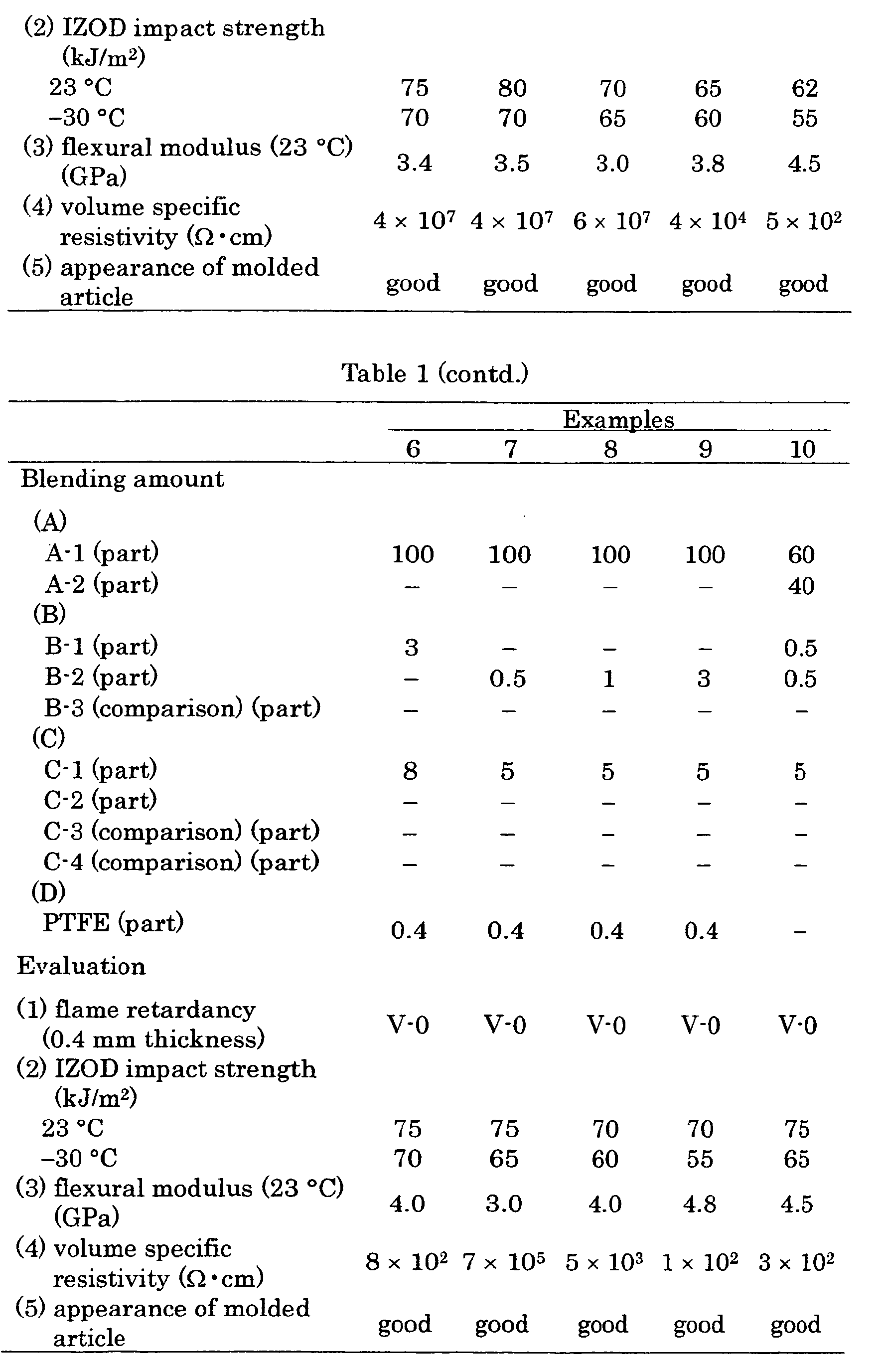

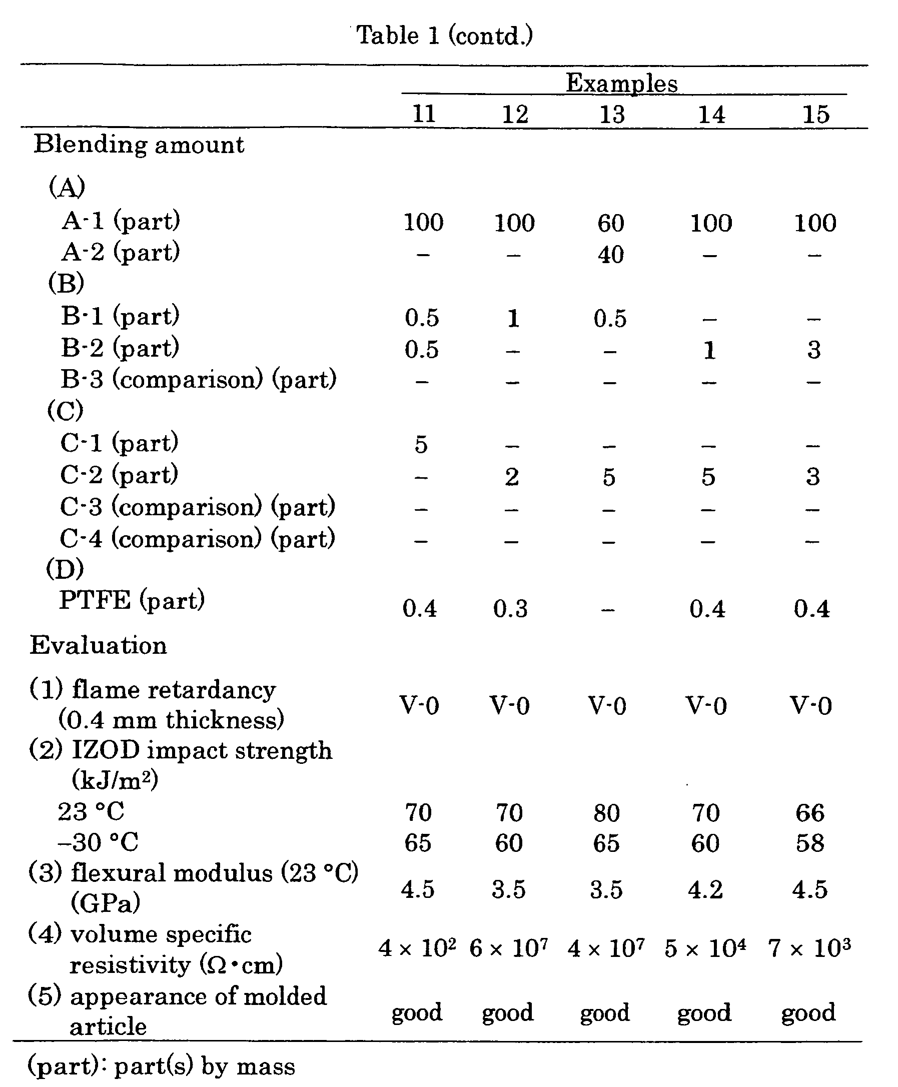

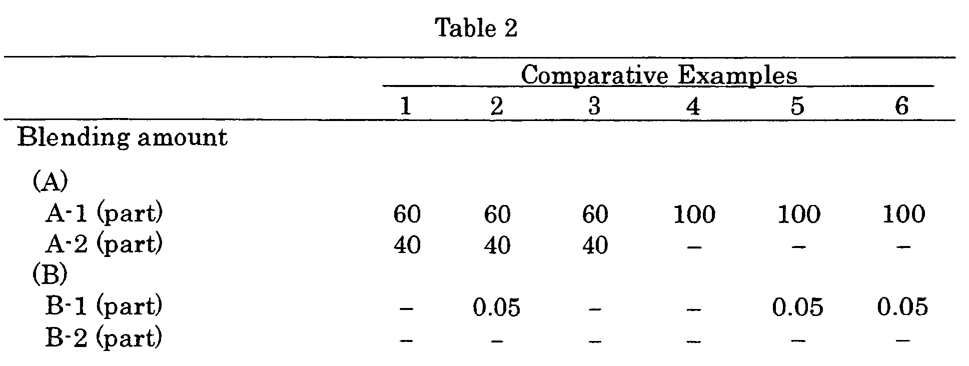

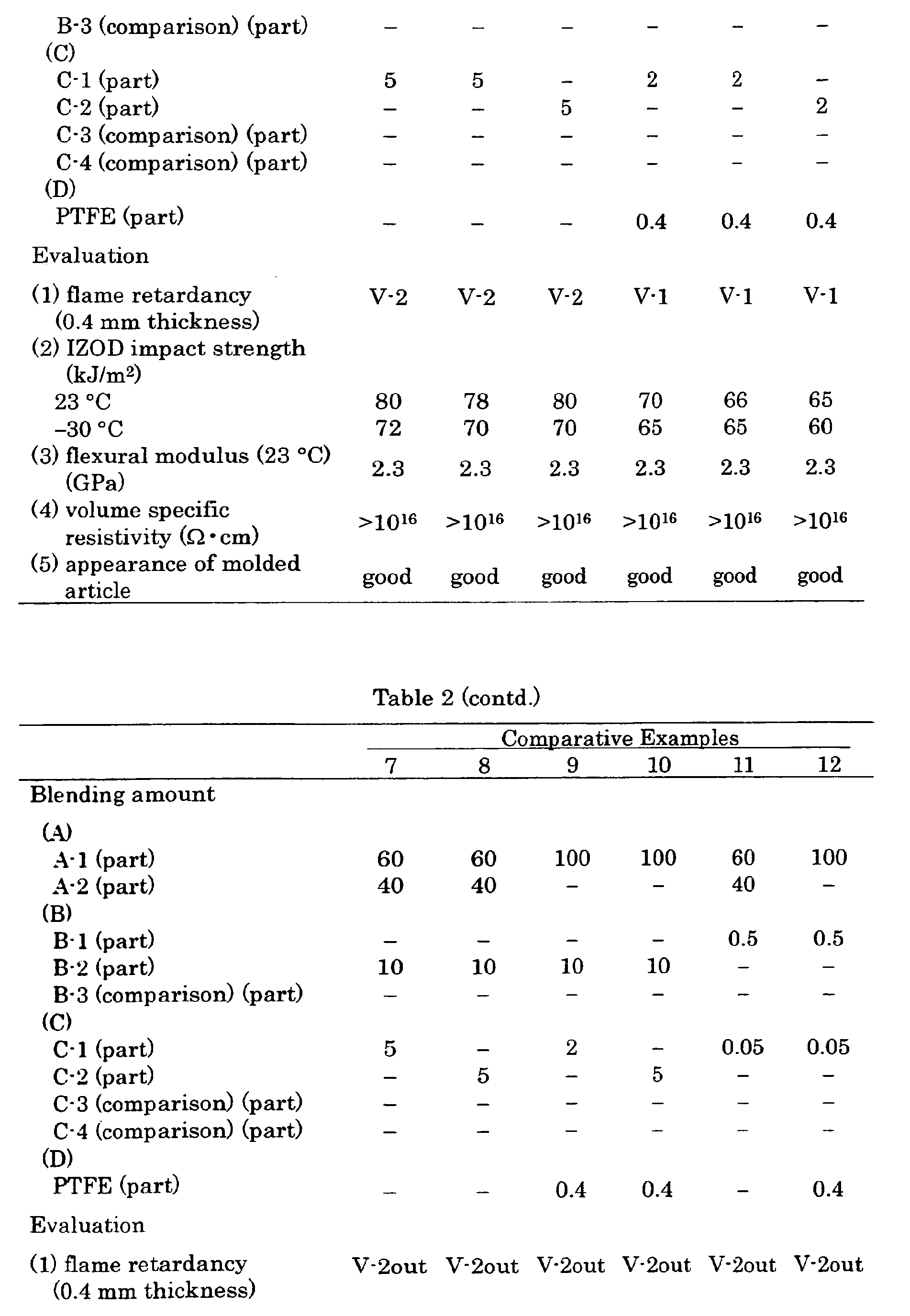

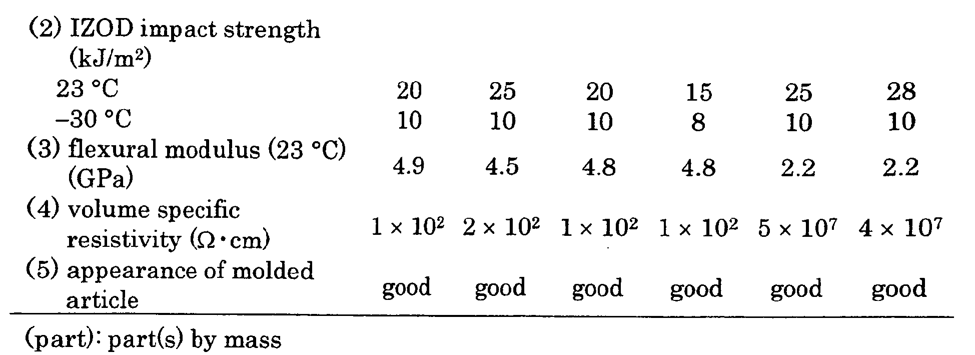

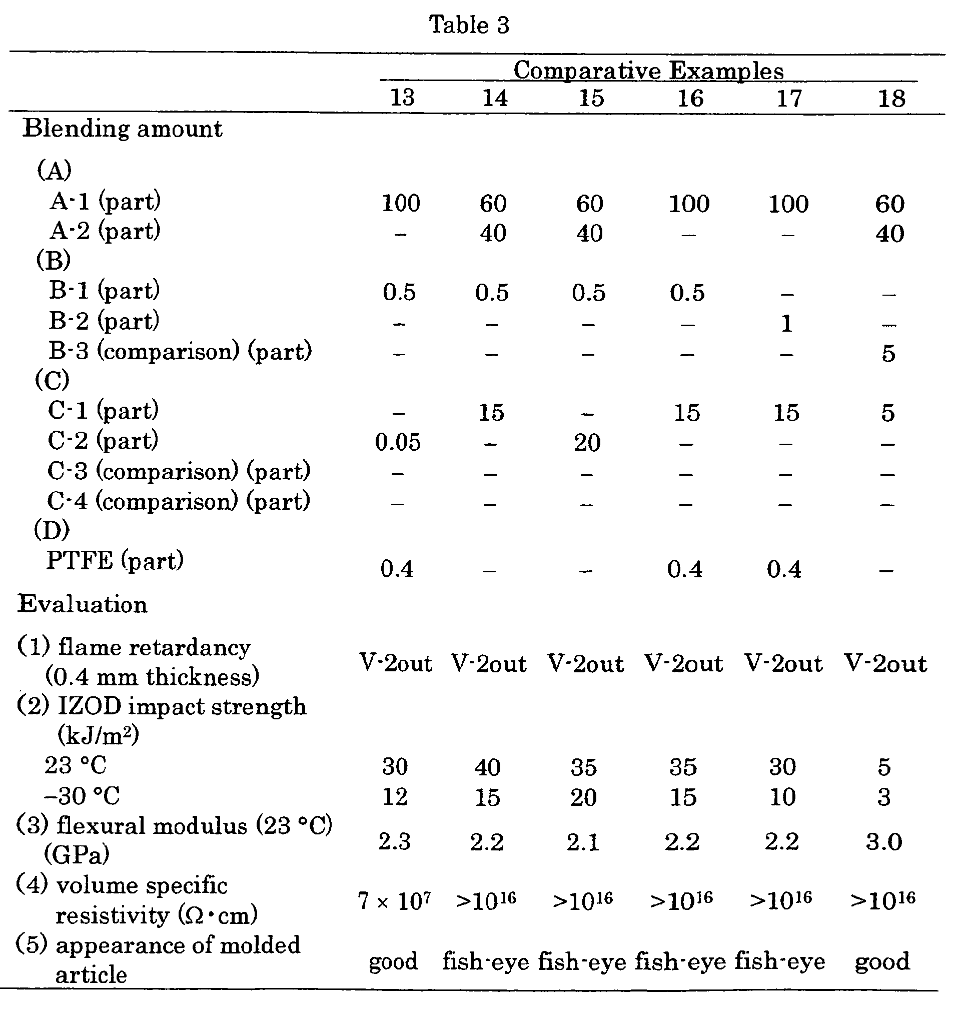

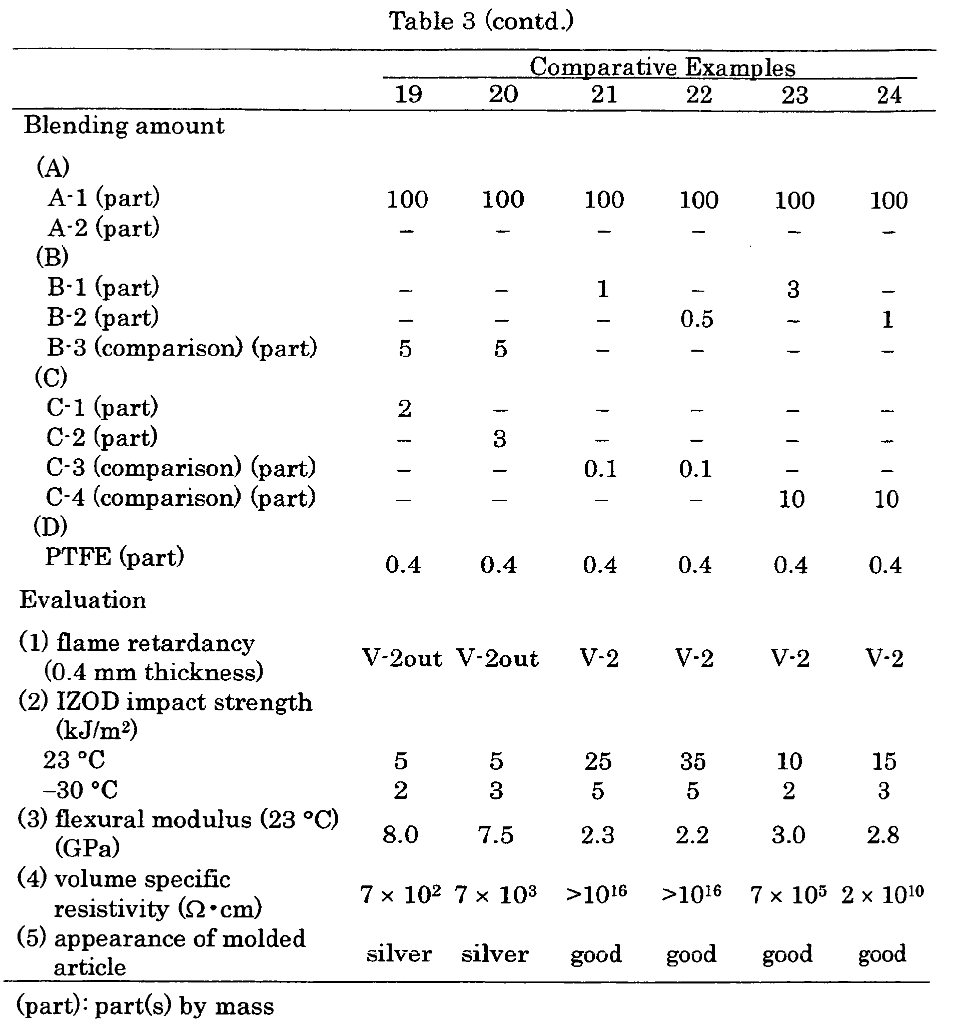

Tables 1 to 3 show that:
(1) Examples 1 to 15: the resin compositions of the invention are excellent, at a thickness of 0.4 mm, in the flame retardancy (V-0), impact strength, rigidity, and electroconductivity. Molded articles excellent in the flame retardancy, electroconductivity, and impact resistance are obtained by using the carbon nanotubes (B).
(2) Comparative Examples 1 to 6: a flame retardancy complying with V-0 is not obtained and the volume resistivity is not reduced when the blending amount of the carbon nanotubes (B) is less than 0.1 part by mass.
(3) Comparative Examples 7 to 10: the flame retardancy is reduced to V-2 out and the impact resistance is low when the blending amount of the carbon nanotubes (B) exceeds 5 parts by mass.
(4) Comparative Examples 11 to 17: the flame retardancy is reduced to V-2 out and the impact resistance is low when the blending amount of the polyorganosiloxane-containing graft copolymer (C) is less than 0.1 part by mass. If exceeding 10 parts by mass, the component C is dispersed deficiently to cause fish-eyes on the surface of molded articles, in addition, the flame retardancy is reduced to V-2 out and the impact resistance is low.
(5) Comparative Examples 18 to 20: the flame retardancy and impact resistance are reduced when carbon fibers are used in place of the carbon nanotubes (B).
(6) Comparative Examples 21 to 24: the flame retardancy of V-0 at a thickness of 0.4 mm is difficult to obtain and the impact resistance is reduced when the salt of perfluorobutylsulfonic acid or the phosphoric ester is used as the flame retardant in place of the polyorganosiloxane-containing graft copolymer (C).

### INDUSTRIAL APPLICABILITY

The flame-retardant polycarbonate resin composition of the invention shows a high flame retardancy complying with V-0 class even at a thickness as thin as 0.5 mm or less. The resin composition is also well balanced in the electroconductivity, impact resistance, and appearance of molded articles. Therefore, thin molded articles of the resin composition are suitably used in the fields requiring the thin wall, light weight and high flame retardancy, particularly in the fields of OA devices, electrical or electronic parts, etc.

## Claims

1. A flame-retardant polycarbonate resin composition which comprises 100 parts by mass of an aromatic polycarbonate resin (A), 0.1 to 5 parts by mass of carbon nanotubes (B) and 0.1 to 10 parts by mass of a polyorganosiloxane-containing graft copolymer (C),
wherein the content of non-crystalline carbon particles in the carbon nanotubes is 10% by mass or less.

2. The flame-retardant polycarbonate resin composition according to claim 1, which further comprises 0.05 to 2 parts by mass of a fibril-forming polytetrafluoroethylene (D).

3. The flame-retardant polycarbonate resin composition according to claim 1 or 2, wherein the aromatic polycarbonate resin (A) has a branched structure.

4. A molded article of the flame-retardant polycarbonate resin composition as defined in any one of claims 1 to 3.

5. The molded article according to claim 4, which is for use in automotive parts, electrical or electronic parts or parts of communication equipments.

6. The molded article according to claim 4, which is in a form of film or sheet.

## Patentansprüche

1. Flammenhemmende Polycarbonatharzzusammensetzung, welche 100 Gew.-Teile eines aromatischen Polycarbonatharzes (A), 0,1 bis 5 Gew.-Teile Kohlenstoffnanoröhren (B) und 0,1 bis 10 Gew.-Teile eines Polyorganosiloxan-haltigen Pfropfcopolymeren (C) enthält,
wobei der Anteil an nicht-kristallinen Kohlenstoffpartikeln in den Kohlenstoffnanoröhren 10 Gew.-% oder weniger beträgt.

2. Flammenhemmende Polycarbonatharzzusammensetzung nach Anspruch 1 , welche darüber hinaus 0,05 bis 2 Gew.-Teile eines Fibrillenbildenden Polytetrafluorethylens (D) enthält,

3. Flammenhemmende Polycarbonatharzzusammensetzung nach Anspruch 1 oder 2, wobei das aromatische Polycarbonatharz (A) eine verzweigte Struktur aufweist.

4. Formteil aus der flammenhemmenden Polycarbonatharzzusammensetzung wie in einem der Ansprüche 1 bis 3 definiert.

5. Formteil nach Anspruch 4, welches für die Verwendung in Automobilteilen, elektrischen oder elektronischen Teilen oder für Teile von Kommunikationsgeräten vorgesehen ist.

6. Formteil nach Anspruch 4, welches in Form eines Films oder einer Folie vorliegt.

## Revendications

1. Composition de résine de polycarbonate retardatrice de flamme qui comprend 100 parts par masse d'une résine de polycarbonate aromatique (A), 0,1 à 5 parts par masse de nanotubes de carbone (B) et 0,1 à 10 parts par masse d'un copolymère de greffe contenant du polyorganosiloxane (C),
dans laquelle la teneur de particules de carbone non-cristallines dans les nanotubes de carbone est 10 % en masse ou moins.

2. Composition de résine de polycarbonate retardatrice selon la revendication 1 comprenant en outre 0,05 à 2 parts en masse d'un polytetraflouroethylène formant de fibrilles (D).

3. Composition de résine de polycarbonate retardatrice selon la revendication 1 ou 2 dans laquelle la résine de polycarbonate aromatique (A) a une structure ramifiée.

4. Article moulé de la composition de résine de polycarbonate retardatrice tel que définie selon l'une des revendications 1 à 3.

5. Article moulé selon la revendication 4 qui est à l'usage dans les parts automotifs, les parts électriques ou électroniques ou les parts d'équipements de communication.

6. Article moulé selon la revendication 4 qui est sous forme de film ou feuille.
